# EUROPEAN PATENT APPLICATION

(11) **EP 3 839 842 A1**
(43) Date of publication of application: **23.06.2021**
(21) Application number: 19217005.8
(22) Date of filing: 17.12.2019
(51) Int. Cl.: G06Q 10/04, G06Q 10/06

(54) **A HAND HELD DEVICE FOR VECTOR CONTROL MANAGEMENT**

(71) Applicant: Bayer AG, 51373 Leverkusen (DE)
(72) Inventor: The designation of the inventor has not yet been filed
(74) Representative: BIP Patents

(57) **Abstract**

The present invention relates to a hand held device (10) for vector control management, comprising a processing unit (20), a camera unit (30), and an output unit (40). The camera unit is configured to enable the user to acquire at least one image relating to an environmental area. The processing unit is configured to analyze the at least one image to determine the presence of at least one breeding site for a disease transmitting pest. The processing unit is configured to determine at least one action to control the at least one breeding site. The output unit is configured to output the information about the at least one breeding site on the at least one image and at least one action to control the at least one breeding site.

## Description

### FIELD OF THE INVENTION

The present invention relates to a hand held device for vector control management and a method for vector control management, as well as to a computer program product and a computer readable medium.

### BACKGROUND OF THE INVENTION

The general background of this invention is vector control management. Vector-borne diseases are a major threat to the health of societies around the world, which exact an immense toll on economies, restricting both rural and urban development. 80% of the world's population is at risk of one or more vector-borne diseases. 17% of the global burden of communicable diseases is due to vector-borne diseases. Over 700,000 deaths are caused by vector-borne diseases annually. US$ 9.9 billion was the aggregated economic global cost associated with dengue in 2013 (Information extracted from WHO "Global Vector Control Response 2017 - 2030). Vector control is the best-proven, or the only preventive measure against these diseases, but challenges exist that restrict the full impact of vector control. Limited investments and resources has resulted in inadequate delivery of vector control interventions. As an example, there is often a poor coordination between sectors; weak or non-existent monitoring and evaluation systems and/or limited proven interventions for certain vectors and situations. Consequently, inadequate delivery of vector control interventions results thereof.

### SUMMARY OF THE INVENTION

It would be advantageous to provide vector control management tools to address the shortfalls of current vector control activities. The object of the present invention is solved with the subject matter of the independent claims, wherein further embodiments are incorporated in the dependent claims. It should be noted that the following described aspects and examples of the invention apply also for the hand held device for vector control management, the method for vector control management, and for the computer program product and the computer readable medium.

According to a first aspect, there is provided a hand held device for vector control management, comprising a processing unit, a camera unit, and an output unit. The camera unit is configured to enable the user to acquire at least one image relating to an environmental area. The processing unit is configured to analyze the at least one image to determine the presence of at least one breeding site for a disease transmitting pest. The processing unit is configured to determine at least one action to control the at least one breeding site. The output unit is configured to output the information about the presence of the at least one breeding site on the at least one image and at least one action to control the at least one breeding site.

In this way, a user which lives in an environmental area known to be a potential living habitat for a disease transmitting pest can acquire an image of his environment. The image is analyzed by the hand held with image analysis for the presence of a potential and/or existing breeding site(s) of the disease transmitting pest and information is provided to control the breeding sites e.g. removing the breeding sites e. g. by discharging stagnant water in a planted pot which is a potential breeding site for mosquitos.

In an example, the hand held device further comprises a transmitter, a GPS unit and a receiver. The processing unit is configured to determine the geographical location of the environmental area the determination comprising utilization of the GPS unit. The processing unit is configured to utilize the transmitter to transmit information comprising the at least one geographical location of the environmental area. The processing unit is configured to utilize the receiver to receive disease information that comprises disease incidences relating to a disease transmitting pest in the proximity of the geographical location and the output unit is configured to output the disease information.

In other words, a hand held device such as a smartphone can use its GPS unit to determine a location of the smartphone. From that location, "historical" disease information relating to disease transmitting pests (such as disease incidences) associated with the location and/or the surrounding area of this location can be provided to the user via the screen of the smartphone. The user can take this information into account in order to allocate resources to execute the actions to control the breeding site(s). In an environmental area where e.g. dengue disease incidences have occurred the execution of proposed actions to control identified breeding site(s) is more urgent than in an environmental area where no disease incidences occurred previously.

In an example, the analysis of the presence of at least one breeding site for a disease transmitting pest on the at least one acquired image comprises the identification of an object that is capable to function as a receptacle for water.

In this manner, the image analysis comprises the identification of different types of objects that can function as a receptacle for water. This turns out to be beneficial as the identification of stagnant water itself is often only possible in exceptional circumstances such as after rainfall or in areas where there is inland body of water. Consequently, the identification of breeding site(s) is often more realistic and accurate with the identification of object(s) as described herein.

In an example, the identification of an object that is capable to function as a receptable for water comprises the identification of an object that is selected from the group of flower/ornamental pot, potted plant, bin, container, bottle, trash, bag, drain, pothole, puddle, vessel, tank, vase, hollow ware, can, old tire, animal trough, swimming pool, catch basin, paddling pool, rain barrel, roof gutter, flower vase, toilet, cup, sink, gutter, and sewer.

In an example, the hand held device further comprises an input unit. The input unit is configured to enable a user of the device to provide information relating to the execution of the at least one action to control the at least one breeding site. The output unit is configured to output the information relating to the execution of the at least one action to control the at least one breeding site.

In this way, the device provided to a user supports the logging of vector control activities such as the recordation of the actions that have been executed to control the identified breeding site(s).

In an example, the processing unit is configured to utilize the transmitter to transmit information comprising the at least one image acquired from the environmental area, the presence of the at least one breeding site on the at least one acquired image, the at least one action to control the at least one breeding site as determined by the processing unit and/or the information relating to the execution of the at least one action to control the at least one breeding site.

In this way, all (or a part) of data relevant to vector control collected and/or generated on the hand held can be submitted to a vector control health database. Such as vector control health database can support to increase the granularity of the data available about vector control in general. In addition, a vector control program manager can use the information from the vector control health database to complement the data in his own local database or knowledge/experience to make his own decision on the actions to take.

In an example, the at least one action to control the at least one breeding site as determined by the processing unit is selected from the group of physical removal of the at least one breeding site, application of a disease transmitting pest control agent to the at least one breeding site, application of a disease transmitting pest control repellent agent to the user, information where a disease transmitting pest control agent can be acquired, information where a disease transmitting pest control repellent agent can be acquired, information of a professional pest control operator that can be contacted if the action cannot be executed by the user, information to educate the user on preventive control measures of a disease transmitting pest.

In other words, depending on the identification of breeding site(s) and other information e.g. such as the location and previous disease incidences in proximity to the location concrete actions are recommended to the user of the hand held device. These actions are all directed to an improved vector control management.

In an example, the processing unit is configured to determine a risk factor of being infected with a disease relating to a disease transmitting pest wherein the determination of the processing unit comprises the use of the disease information received by the receiver and/or the presence of the at least one breeding site on the at least one acquired image, wherein the output unit is configured to output the information about the risk factor.

In other words, a user receives information about a risk factor of being infected with a disease that is transmitted by a disease transmitting pest depending on various information obtained about the environment where the user is located. The risk factor supports the user in judging the urgency to execute the recommended actions to control the breeding site(s).

In an example, the processing unit is configured to utilize the receiver to receive weather information of the geographical location as determined by the processing unit and wherein the processing unit uses the weather information to determine at least one action to control the at least one breeding site.

In this way, weather data from the location where the user is located can be used in addition in order to evaluate appropriate actions to control the breeding site. E.g. if the weather of the location is forecasted to have very low temperatures it's not necessary to remove the stagnant water as the mosquito eggs will not survive the low temperatures.

In an example, the processing unit is configured to utilize the receiver to receive weather information of the geographical location as determined by the processing unit and wherein the processing unit uses the weather information to determine the risk factor of being infected with a disease relating to a disease transmitting pest.

In other words, the risk factor may change depending on the local weather conditions. E.g. if there is strong wind forecasted the risk of being bitten by a mosquito decreases and therefore also the (short term) risk factor of being infected with a disease transmitted by the mosquito decreases.

According to a second aspect, there is provided a method for vector control management, comprising:
a) providing at least one image relating to an environmental area;
b) analyzing the at least one image for the presence of at least one breeding site for a disease transmitting pest;
c) determining at least one action to control the at least one breeding site;
d) outputting information about the presence of the at least one breeding site on the at least one image and at least one action to control the at least one breeding site.

In other words, the method for vector control management can be operated on any electronic device with an input unit, a processing unit and an output unit such as e.g. a personal computer, labtop, tablet, smartphone, hand held device, and the like.

In an example, there is provided a method for vector control using a hand held device, comprising:
a) acquiring, by a user of the hand held device, at least one image relating to an environmental area;
b) analyzing, using the processing unit of the device, the at least one image for the presence of at least one breeding site for a disease transmitting pest on the at least one image;
c) determining, using the processing unit of the device, at least one action to control the at least one breeding site;
d) outputting, using the output unit of the device, information about the presence of the at least one breeding site on the at least one image and at least one action to control the at least one breeding site.

In an example, the device comprises a transmitter, a GPS unit, and a receiver, and wherein the above discussed method steps b) to c) comprises determination of the geographical location of the environmental area the determination comprises utilization of the GPS unit, and wherein the above discussed method steps b) to c) comprises transmittance of the information in regard to the at least one geographical location of the environmental area, and wherein, the above discussed method steps b) to c) comprises receipt of disease information in regard to disease incidences relating to a disease transmitting pest in the proximity of the geographical location as determined by the processing unit, and wherein the method step d) comprises the output unit of the disease information.

According to a third aspect, there is provided computer program product comprising a program code which is stored on a data carrier, and which causes a computer system comprising a main memory to execute the following steps when the program code is loaded into the main memory:
a) receiving at least one image relating to an environmental area;
b) analyzing the at least one image for the presence of at least one breeding site for a disease transmitting pest on the at least one image;
c) determining at least one action to control the at least one breeding site;
d) outputting information about the presence of the at least one breeding site on the at least one image and at least one action to control the at least one breeding site.

According to a fourth aspect, there is provided a computer readable medium having stored the computer program product of the third aspect.

Advantageously, the benefits provided by any of the above aspects equally apply to all of the other aspects and vice versa. The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of a hand held device for vector control management;
Fig. 2 shows a method for vector control management using a hand held device;
Fig. 3 shows an example of how a user uses the device.;
Fig. 4 shows an example of how actions are shown to the user of the device.
Fig. 5 shows an example of a dashboard view of vector control management data on an
electronic device such as a personal computer.

Fig. 6 shows another example of a dashboard view of vector control management
data on an electronic device such as a personal computer.

### DETAILED DESCRIPTION OF EMBODIMENTS

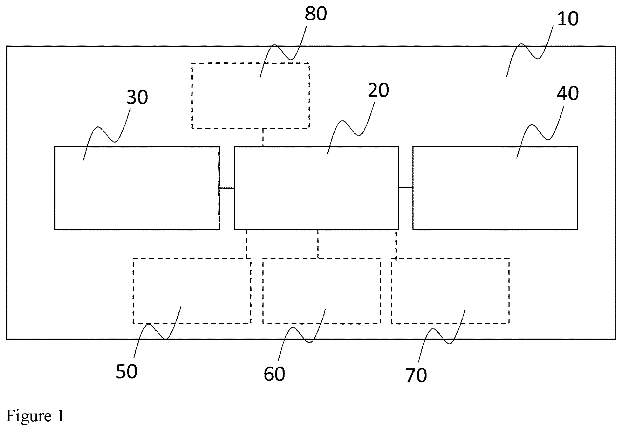

Fig. 1 shows an example of hand held device 10 for vector control management, comprising a processing unit 20, a camera unit 30, and an output unit 40. The camera unit is configured to enable the user to acquire at least one image relating to an environmental area. The processing unit is configured to analyze the at least one image to determine the presence of at least one breeding site for a disease transmitting pest. The processing unit is configured to determine at least one action to control the at least one breeding site. The output unit is configured to output the information about the at least one breeding site on the at least one image and at least one action to control the at least one breeding site.

In an example, the processing unit is configured to analyze the at least one image to determine the location of the at least one breeding site on the at least one image and the output unit is configured to output the information about the location of the at least one breeding site on the at least one image.

In an example, the analysis of the presence of at least one breeding site on the at least one image comprises the identification of the location of the breeding site on the at least one image.

In an example, the hand held comprises a GPS unit and the processing unit is configured to determine the geographical location of the hand held the determination comprising utilization of the GPS unit.

In an example, the term "presence of at least one breeding site" refers to at least one potential and/or existing breeding site.

In an example, the analysis of the presence of at least one breeding site on the at least one image comprises an estimation of potential breeding site(s) in proximity of the acquired image. In this context, the term "in proximity" refers to a radius of 100 meters, preferably 50 meters and more preferably 30 meters from the determined geographical location of the hand held.

In an example, the term "vector control management" refers to the prevention management of transmission of diseases (such as dengue, chikungunya, yellow fever, zika, malaria, onchoerciasis, lymphatic filariasis, chagas, encephalitis, west nile virus, rift valley fever) by disease transmitting (vector) pests and particularly insects such as mosquitos.

In an example, the term "environmental area" refers to an urban and/or rural in- and/or outdoor area particularly to an urbanized in- and/or outdoor area, more particularly to an urbanized outdoor area. An indoor environmental area refers, as an example, to an area within a building such as e.g. a living room, a kitchen, a bathroom, a laundry room, a bedroom etc.

In an example, the at least one image relating to the environmental area comprises an image of (at least a part of the) ground and/or soil.

In an example, the term "breeding site" refers to a larval-stage insect breeding site which is a location where eggs of a larval-stage insect are present and/or can potentially be present and hatch and/or potentially can hatch into larvae. Such a breeding site often includes food sources for the newly hatched larvae. Examples typically preferred by insects with waterborne larval stages include stagnant or fresh water sources, and objects that create a pool of water. Other examples of larval-stage insect breeding sites include moist surfaces. In an example, the term "user" refers to a person using the hand held device, method, computer program element, computer readable medium of the invention.

In an example, the output unit is configured to further output information selected from the group of: information on the environment surrounding the breeding site such as type of building(s), land-use (residential, commercial, recreational, construction, natural, aquatic, etc.); the number of potential breeding sites in proximity of the acquired image; the number of disease transmitting pests determined; the type of disease transmitting pests (life stage, and species) determined; presence/absence of at least one breeding site over time for a determined geographical location; other factors that could be associated with a higher risk of breeding sites such as the level of clutter and/or trash.

In an example, the hand held device further comprises a transmitter 50 and a receiver 70 and the processing unit is configured to utilize the transmitter to transmit the at least one acquired image relating to an environmental area and the processing unit is configured to receive (with the receiver) information about the presence of at least one breeding site for a disease transmitting pest concerning the at least one acquired image.

Thus, image analysis can be done externally, and the results of the image analysis can be forwarded to the hand held device.

According to an example, the held device further comprises a transmitter 50, a GPS unit 60, and a receiver 70. The processing unit is configured to determine the geographical location of the environmental area the determination comprising utilization of the GPS unit. The processing unit is configured to utilize the transmitter to transmit information comprising the at least one geographical location of the environmental area. The processing unit is configured to utilize the receiver to receive disease information that comprises disease incidences relating to a disease transmitting pest in the proximity of the geographical location. The output unit is configured to output the disease information.

Thus, the disease information can be processed externally to the device, for example at an external server and/or the "cloud" and the specific answer to the requested information downloaded to the device and the processing unit then just needs to select that disease information and present it to the user.

In an example, the determination of the geographical location of the environmental area refers to the determination of the geographical location of the hand held device.

In an example, the geographical location is determined at the instant of time when the at least one image is acquired.

In an example, the device is configured to receive satellite imagery of the landscape, and the processing unit is configured use the satellite imagery and the at least one image acquired by the camera of the device in determining the at least one geographical location. In other words, features that are in the acquired image can be compared and/or mapped onto satellite imagery in order to augment the GPS information to determine the at least one geographical location.

In an example, the disease information is selected from the group of: type of disease transmitted by a disease transmitting pest, the number of incidences of a certain type of a disease transmitted by a disease transmitting pest for a certain location, the geographical location where a certain incidence occurred (e.g. shown on a geographical map) and an indication of the time when the incidence occurred.

In an example, the term "in proximity to the geographical location in context with the disease incidences" refers to a radius of 100 km, preferably 50 km, more preferably 10 km and even more preferably 5 km from the determined geographical location of the hand held.

In an example, the processing unit is configured to receive information about an estimation of potential breeding site(s) in proximity of the acquired image based on the determined geographical location and of at least another acquired image from the user and/or another user in proximity of the determined geographical location. In this context, the term "in proximity" refers to a radius of 500 meters, preferably 100 meters and more preferably 50 meters from the determined geographical location of the hand held.

According to an example, the analysis of the presence of at least one breeding site for a disease transmitting pest on the at least one acquired image comprises the identification of an object that is capable to function as a receptacle for water.

In an example, analysis of the at least one image comprises utilization of a machine learning algorithm.

In an example, image classification technology classifies what is contained in an image. Image localization technology specifies the location of single object in an image whereas object detection technology specifies the location of multiple objects in the image. Finally, Image segmentation creates a pixel wise mask of each object in the images. Such technologies are familiar to a skilled person in the art.

In an example, the term "identification of an object" comprises one or more of image classification technology, image localization technology, object detection technology and image segmentation technology.

In an example, "identification of an object" comprises image classification technology, image localization technology, object detection technology and image segmentation technology.

According to an example, the identification of an object that is capable to function as a receptable for water comprises the identification of an object selected from the group of flower/ornamental pot, potted plant, bin, container, bottle, trash, bag, drain, pothole, puddle, vessel, tank, vase, hollow ware, can, old tire, animal trough, swimming pool, catch basin, paddling pool, rain barrel, roof gutter, flower vase, toilet, cup, sink, gutter, and sewer.

In an example, the "identification of an object" comprises the identification of stagnant and/or fresh water sources on the at least one image such as e.g. inland body of water as ponds, lakes, canals, creeks, ditches, irrigation channels, and/or marshy areas.

In an example, the "identification of an object" comprises the identification of moist surfaces on the at least one image such as e.g. soil, animal feces/manure, animal sheds or pens, rotting vegetation and plant material such as plant stems, fruits, or wood, and/or funguses.

According to an example, the hand held device further comprises an input unit 80. The input unit is configured to enable a user of the device to provide information relating to the execution of the at least one action to control the at least one breeding site.

In an example, the input unit is configured to enable a user of the device to provide information in regard to at least one object of the at least one acquired image.

In an example, the input unit is configured to enable a user of the device to provide information in regard to at least one breeding site of the at least one acquired image.

According to an example, the processing unit is configured to utilize the transmitter to transmit information comprising the at least one image acquired from the environmental area, the presence of the at least one breeding site on the at least one acquired image, the at least one action to control the at least one breeding site as determined by the processing unit and/or the information relating to the execution of the at least one action to control the at least one breeding site.

In an example, information to be transmitted also comprises information about the risk factor of being infected with a disease relating to a disease transmitting pest.

According to an example, the at least one action to control the at least one breeding site as determined by the processing unit is selected from the group of physical removal of the at least one breeding site, application of a disease transmitting pest control agent to the at least one breeding site, application of a disease transmitting pest control repellent agent to the user, information where a disease transmitting pest control agent can be acquired, information where a disease transmitting pest control repellent agent can be acquired, information of a professional pest control operator that can be contacted if the action cannot be executed by the user, information to educate the user on preventive control measures of a disease transmitting pest.

In an example, a pest control agent comprises a larvicide which is an insecticide that is specifically targeted against the larval life stage of an insect. Their most common use is against mosquitoes. Larvicides may be contact poisons, stomach poisons, growth regulators, or biological control agents.

In an example, a pest control repellent agent comprises a compound killing, repelling or preventing an increase in disease transmitting pest growth or populations.

In an example, the processing unit is configured to determine the geographical location of the environmental area the determination comprising utilization of the GPS unit; wherein the processing unit is configured to utilize the transmitter to transmit information comprising the at least one geographical location of the environmental area; wherein the processing unit is configured to utilize the receiver to receive information where a disease transmitting pest control agent can be acquired and/or information where a disease transmitting pest control repellent agent can be acquired and/or information of a professional pest control operator that can be contacted if the action cannot be executed by the user in each case in the proximity of the geographical location.

In an example, the term "in proximity" in this context refers to a radius of 300 km, preferably 100 km, more preferably 50 km, and even more preferably 20 km from the determined geographical location of the hand held.

In an example, the pest control operator performs professional pest control services and address related structural and safety concerns.

In an example, the breeding site(s) identified on the at least one image may require professional service by a pest control operator and a user may not be allowed to execute necessary actions e.g. due to the shear amount of identified breeding site(s), closeness to nature protection areas, regulatory demands etc.

In an example, the information to educate the user on preventive control measures of a disease transmitting pest relates to a disease transmitting pest for which at least one breeding site has been identified on the at least one acquired image.

According to an example, the processing unit is configured to determine a risk factor of being infected with a disease relating to a disease transmitting pest wherein the determination of the processing unit comprises the use of the disease information received by the receiver and/or the presence of the at least one breeding site on the at least one acquired image, wherein the output unit is configured to output the information about the risk factor.

In an example, the determination of the risk factor comprises the use of the identification of the presence of breeding site(s) from images as acquired by other users in proximity of the identified geographical location. This information can be received by the receiver of the hand held device.

In an example, the processing unit is configured to utilize the receiver to receive information of the identification of the presence of breeding site(s) from images as acquired by other users (preferably including their executed actions) in proximity to the geographical location as determined by the processing unit and wherein the processing unit uses this information to determine a risk factor being infected with a disease relating to a disease transmitting pest and/or to determine at least one action to control the at least one breeding site.

In an example "in proximity to the geographical location" in this context refers to a radius of 20 km, preferably 10 km, more preferably 5 km, and even more preferably 2 km from the determined geographical location.

In an example, the information of the number of breeding site(s) identified on the at least one acquired image together with the number of breeding site(s) as identified by the same user on at least one other image and/or at least one image by another user in proximity of the identified geographical location is used to calculate the density of breeding sites for a geographical location.

In an example "in proximity to the geographical location" in this context refers to a radius of 20 km, preferably 10 km, more preferably 5 km, and even more preferably 2 km from the determined geographical location.

In an example the input unit is configured to enable a user of the device to provide information relating to personal data such as user age, user sex, address of the environmental area of the at least one acquired image, breeding site identified at the environmental area of the at least one acquired image, disease transmitting pest identified at the environmental area of the at least one acquired image, etc.

In an example the "risk factor" is calculated according to the risk function: *λᵢ(t, X)* for user *i* at time *t* as follows: *λᵢ(t, X)* = *λᵢ(t, X⁽ⁱ⁾)* + *λᵢ(t, X⁽⁻ⁱ⁾)*, where *λᵢ(t, X⁽ⁱ⁾)* is the fixed effect dependent on user *i* and *λᵢ(t, X⁽⁻ⁱ⁾)* is the spatial effect dependent on the environmental area of user *i*.

In an example, the calculation of *λᵢ(t, X⁽ⁱ⁾)* risk factor comprises one or more of the users age, and/or user sex.

In an example, the calculation of *λᵢ(t, X⁽⁻ⁱ⁾)* risk factor comprises one or more of spatial distribution of individuals at the identified geographical location; identified geographical location of the identified at least one breeding site on the at least one acquired image, number of identified breeding sites on the at least one acquired image, the density of breeding sites for a geographical location, historical disease incidences related to the identified geographical location, weather data relating to the identified geographical location.

In an example, the risk factor may be calculated with methods such as the e.g. Weibull distribution etc. (see Guindo et. al, BMC Medical Research Methodology (2019) 19:149).

According to an example, the processing unit is configured to utilize the receiver to receive weather information of the geographical location as determined by the processing unit and wherein the processing unit uses the weather information to determine at least one action to control the at least one breeding site.

According to an example, the processing unit is configured to utilize the receiver to receive weather information of the geographical location as determined by the processing unit and wherein the processing unit uses the weather information to determine the risk factor of being infected with a disease relating to a disease transmitting pest.

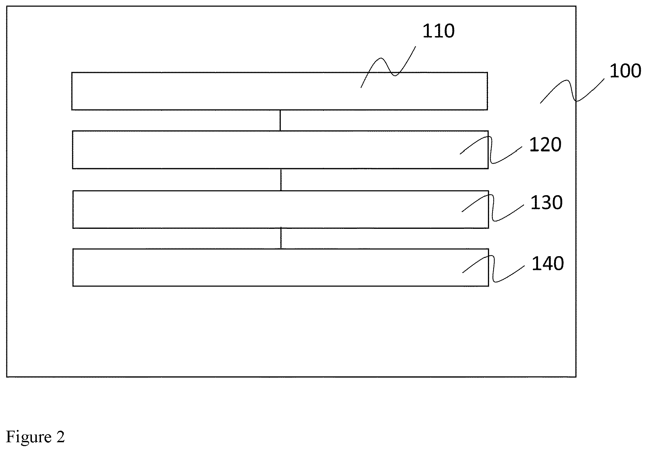

Figure 2 shows a method 100 for vector control management in its basic steps.
The method 100 comprises:
in an providing step 110, also referred to as step a), providing at least one image relating to an environmental area;
in an analyzing step 120, also referred to as step b), analyzing the at least one image for the presence of at least one breeding site for a disease transmitting pest;
in a determining step 130, also referred to as step c), determining at least one action to control the at least one breeding site;
in an outputting step 140, also referred to as step d), outputting information about the presence of the at least one breeding site on the at least one image and at least one action to control the at least one breeding site.

In an example, the method for vector control management is conducted by using an electronic device such as a personal computer, labtop, tablet, smartphone, hand held device, and the like.

In an example, the electronic device comprises an input unit, a processing unit and an output unit.

According to an example, the method for vector control management uses as an electronic device a hand held device and comprises:
in an acquiring step, also referred as step a), acquiring by a user of the hand held device at least one image relating to an environmental area;
in an analyzing step, also referred to as step b), analyzing, using the processing unit of the device, the at least one image for the presence of at least one breeding site for a disease transmitting pest on the at least one image;
in a determining step, also referred to as step c), determining, using the processing unit of the device, at least one action to control the at least one breeding site;
in an outputting step, also referred to as step d), outputting, using the output unit of the device, information about the presence of the at least one breeding site on the at least one image and at least one action to control the at least one breeding site.

According to an example, the electronic device (such as e.g. a hand held device) comprises a transmitter, a GPS unit, and a receiver, and wherein step b) to c) comprises determination of the geographical location of the environmental area the determination comprising utilization of the GPS unit, and wherein step b) to c) comprises transmittance of the information in regard to the at least one geographical location of the environmental area, and wherein, step b) to c) comprises receipt of disease information in regard to disease incidences relating to a disease transmitting pest in the proximity of the geographical location as determined by the processing unit, and wherein step d) comprises the output unit of the disease information.

In an example, the receipt of the disease information regarding disease incidences relating to a disease transmitting pest in proximity of the geographical location occurs in step b) and the disease information is used by the processing unit to determine at least one action to control the at least one breeding site.

In an example, the analysis (in step b)) of the presence of at least one breeding site for a disease transmitting pest on the at least one acquired image comprises identifying an object that is capable to function as a receptacle for water.

In an example, the identification of an object (in step b)) that is capable to function as a receptable for water comprises identifying an object selected from the group of flower/ornamental pot, potted plant, bin, container, bottle, trash, bag, drain, pothole, puddle, vessel, tank, vase, hollow ware, can, old tire, animal trough, swimming pool, catch basin, paddling pool, rain barrel, roof gutter, flower vase, toilet, cup, sink, gutter, and sewer.

In an example, the electronic device (such as e.g. a hand held device) comprises an input unit, wherein, inputting (in step e), using the input unit of the electronic device, information relating to the execution of the at least one action to control the at least one breeding site, and outputting, using the output unit of the electronic device, the information relating to the execution of the at least one action to control the at least one breeding site.

In an example, transmittance of information (step d) comprising the at least one image acquired from the environmental area, the presence of the at least one breeding site on the at least one acquired image, the at least one action to control the at least one breeding site as determined by the processing unit and/or the information relating to the execution of the at least one action to control the at least one breeding site.

In an example, the at least one action (in step c)) to control the at least one breeding site is selected from the group of physical removal of the at least one breeding site, application of a disease transmitting pest control agent to the at least one breeding site, application of a disease transmitting pest control repellent agent to the user, information where a disease transmitting pest control agent can be acquired, information where a disease transmitting pest control repellent agent can be acquired, information of a professional pest control operator that can be contacted if the action cannot be executed by the user, information to educate the user on preventive control measures of a disease transmitting pest.

In an example, determination of a risk factor (in step c)) of being infected with a disease relating to a disease transmitting pest wherein the determination comprises the use of the disease information received by the receiver and/or the presence of the at least one breeding site on the at least one acquired image, and outputting, using the output unit of the electronic device (such as e.g. a hand held device), the information about the risk factor.

In an example, utilizing the receiver (in step b) to receive weather information of the geographical location as determined by the processing unit and using the weather information to determine at least one action to control the at least one breeding site.

In an example, utilizing the receiver (in step b) to receive weather information of the geographical location as determined by the processing unit and using the weather information to determine the risk factor of being infected with a disease relating to a disease transmitting pest.

In another exemplary embodiment, a computer program or computer program product is provided that is characterized by being configured to execute the method steps of the method according to one of the preceding embodiments, on an appropriate system.

The computer program product might therefore be stored on a computer unit, which might also be part of an embodiment. This computing unit may be configured to perform or induce performing of the steps of the method described above. Moreover, it may be configured to operate the components of the above described electronic device such as a e.g. a hand held device. The computing unit can be configured to operate automatically and/or to execute the orders of a user. A computer program may be loaded into a working memory of a data processor. The data processor may thus be equipped to carry out the method according to one of the preceding embodiments.
This exemplary embodiment of the invention covers both, a computer program product that right from the beginning uses the invention and computer program product that by means of an update turns an existing program into a program that uses invention.

Further on, the computer program product might be able to provide all necessary steps to fulfill the procedure of an exemplary embodiment of the method as described above.
According to a further exemplary embodiment of the present invention, a computer readable medium, such as a CD-ROM, USB stick or the like, is presented wherein the computer readable medium has a computer program product stored on it which computer program element is described by the preceding section.

A computer program product may be stored and/or distributed on a suitable medium, such as an optical storage medium or a solid state medium supplied together with or as part of other hardware, but may also be distributed in other forms, such as via the internet or other wired or wireless telecommunication systems.

However, the computer program product may also be presented over a network like the World Wide Web and can be downloaded into the working memory of a data processor from such a network. According to a further exemplary embodiment of the present invention, a medium for making a computer program product available for downloading is provided, which computer program product is arranged to perform a method according to one of the previously described embodiments of the invention.

According to an example, there is provided a computer program product comprising a program code which is stored on a data carrier and which causes a computer system comprising a main memory to execute the following steps when the program code is loaded into the main memory:
a) receiving at least one image relating to an environmental area;
b) analyzing the at least one image for the presence of at least one breeding site for a disease transmitting pest on the at least one image;
c) determining at least one action to control the at least one breeding site;
d) outputting information about the presence of the at least one breeding site on the at least one image and at least one action to control the at least one breeding site.

According to an example, the disease transmitting pest is an insect, preferably a mosquito and the disease is selected form the group of as dengue, chikungunya, yellow fever, zika, malaria, onchoerciasis, lymphatic filariasis, chagas, encephalitis, west nile virus, and rift valley fever.

In an example, the disease is selected from the group of: dengue, chikungunya, yellow fever, zika.

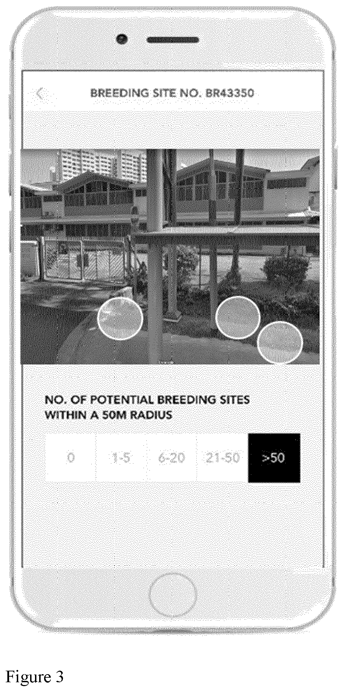

Figure 3 shows an example of how a user uses the device. The user has an App on their smart phone. When asked to define what she can do to protect herself from being infected by disease transmitted by a disease transmitting pest in her living environment, the user is actually not sure. She however believes that she can do better, and is operating a device as described herein, that in this example is the smartphone operating an APP (application). Returning to her problem, as to protect herself from being infected by a disease transmitted by a disease transmitting pest, the device requests that she acquires at least one image from her living environment. At this point, the processor in the smartphone determines on the at least one image at least one breeding site of a disease transmitting pest and shows this information to the user. Based on the at least one image an estimation of potential breeding sites in proximity to the acquired image (e.g. within a radius of 50 meters) can be provided. If the estimated number is high the user can acquire further images to identify other breeding sites in proximity to the ones identified on the first image.

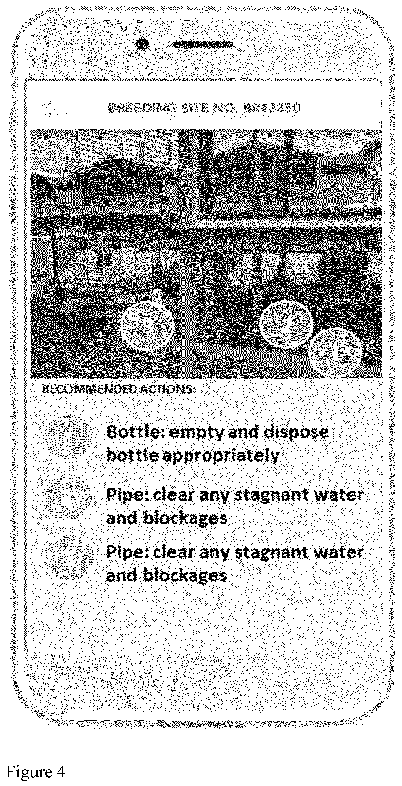

Figure 4 shows an example of how actions are shown to the user of the device. After image analysis by the processor in the smartphone concrete actions are proposed for each breeding site identified on the at least one acquired image.

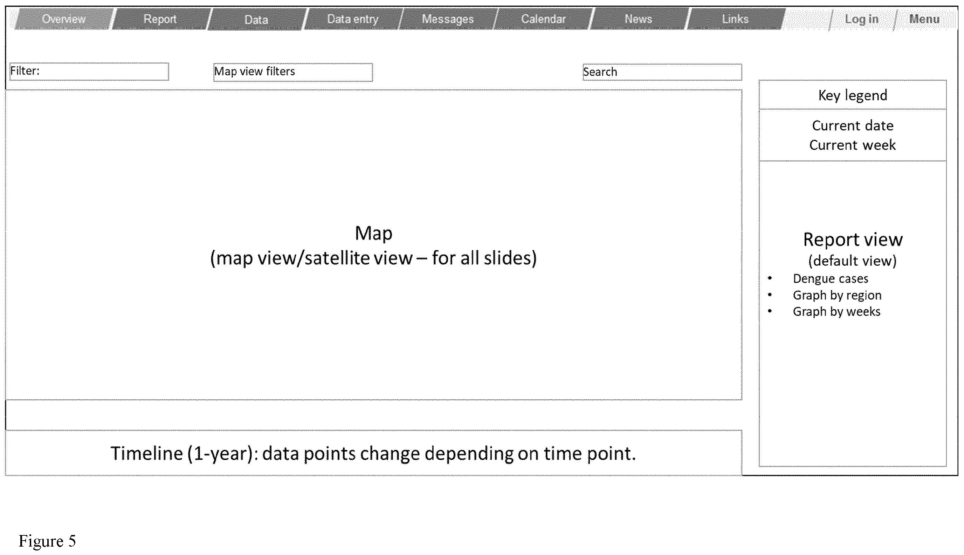

Fig. 5 shows an example of a dashboard view of vector control management data on an electronic device such as a personal computer. Breeding sites identified e.g. on a plurality of images e.g. from a user or various users can be depicted on a map for a certain geographical location and a certain point in time. In addition, disease information for the same geographical location can be shown (e.g. also on the map with a dot having another colour) and/or within the right box on the screen.

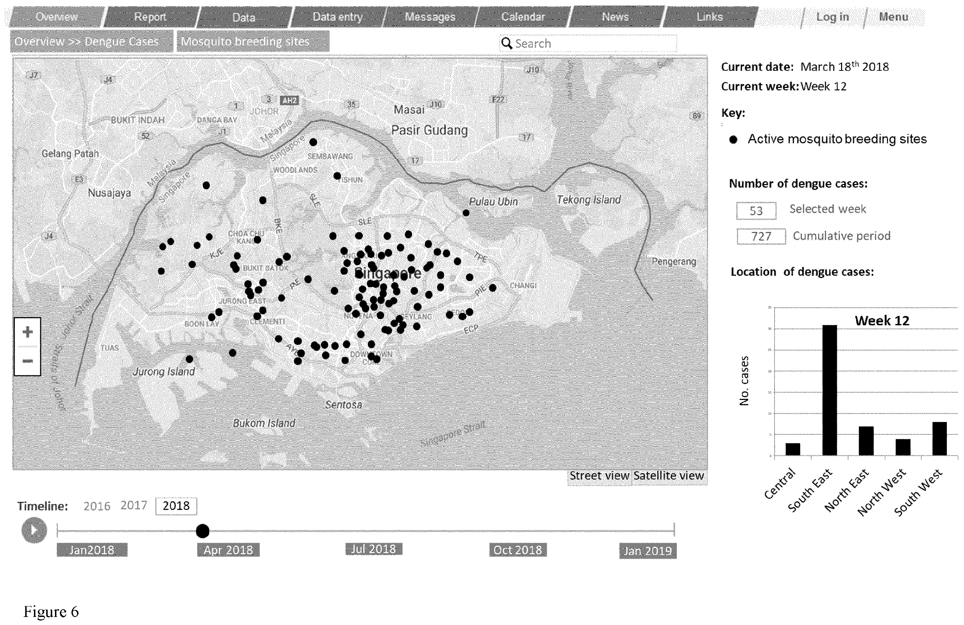

Fig. 6 shows another example of a dashboard view of vector control management data on an electronic device such as a personal computer. In comparison to figure 5, figure 6 shows an example of a concrete data set shown on the monitor of the electronic device.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.
In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A hand held device (10) for vector control management, comprising:
- a processing unit (20);
- a camera unit (30)
- an output unit (40); and
wherein, the camera unit is configured to enable the user to acquire at least one image relating to an environmental area;
wherein the processing unit is configured to analyze the at least one image to determine the presence of at least one breeding site for a disease transmitting pest,
wherein the processing unit is configured to determine at least one action to control the at least one breeding site;
wherein the output unit is configured to output the information about the at least one breeding site on the at least one image and at least one action to control the at least one breeding site.

2. A hand held device according to claim 1, further comprising
- a transmitter (50);
- a GPS unit (60);
- a receiver (70); and
wherein the processing unit is configured to determine the geographical location of the environmental area the determination comprising utilization of the GPS unit;
wherein the processing unit is configured to utilize the transmitter to transmit information comprising the at least one geographical location of the environmental area;
wherein the processing unit is configured to utilize the receiver to receive disease information that comprises disease incidences relating to a disease transmitting pest in the proximity of the geographical location;
wherein the output unit is configured to output the disease information.

3. A hand held according to any one of the previous claims, wherein the analysis of the presence of at least one breeding site for a disease transmitting pest on the at least one acquired image comprises the identification of an object that is capable to function as a receptacle for water.

4. A hand held according to claim 3, wherein the identification of an object that is capable to function as a receptable for water comprises the identification of an object selected from the group of flower/ornamental pot, potted plant, bin, container, bottle, trash, bag, drain, pothole, puddle, vessel, tank, vase, hollow ware, can, old tire, animal trough, swimming pool, catch basin, paddling pool, rain barrel, roof gutter, flower vase, toilet, cup, sink, gutter, and sewer.

5. A hand held device according to any one of the previous claims, further comprising
- an input unit (80);
wherein, the input unit is configured to enable a user of the device to provide information relating to the execution of the at least one action to control the at least one breeding site;
wherein the output unit is configured to output the information relating to the execution of the at least one action to control the at least one breeding site.

6. A hand held device according to claim 5, wherein the processing unit is configured to utilize the transmitter to transmit information comprising the at least one image acquired from the environmental area, the presence of the at least one breeding site on the at least one acquired image, the at least one action to control the at least one breeding site as determined by the processing unit and/or the information relating to the execution of the at least one action to control the at least one breeding site.

7. A hand held device according to one of the previous claims, wherein the at least one action to control the at least one breeding site as determined by the processing unit is selected from the group of physical removal of the at least one breeding site, application of a disease transmitting pest control agent to the at least one breeding site, application of a disease transmitting pest control repellent agent to the user, information where a disease transmitting pest control agent can be acquired, information where a disease transmitting pest control repellent agent can be acquired, information of a professional pest control operator that can be contacted if the action cannot be executed by the user, information to educate the user on preventive control measures of a disease transmitting pest.

8. A hand held device according to one of the claims 2 to 7, wherein the processing unit is configured to determine a risk factor of being infected with a disease relating to a disease transmitting pest wherein the determination of the processing unit comprises the use of the disease information received by the receiver and/or the presence of the at least one breeding site on the at least one acquired image, wherein the output unit is configured to output the information about the risk factor.

9. A hand held device according to one of the claims 2 to 8, wherein the processing unit is configured to utilize the receiver to receive weather information of the geographical location as determined by the processing unit and wherein the processing unit uses the weather information to determine at least one action to control the at least one breeding site.

10. A hand held device according to one of the claim 8, wherein the processing unit is configured to utilize the receiver to receive weather information of the geographical location as determined by the processing unit and wherein the processing unit uses the weather information to determine the risk factor of being infected with a disease relating to a disease transmitting pest.

11. A method (100) for vector control management, comprising:
a) providing (110) at least one image relating to an environmental area;
b) analyzing (120) the at least one image for the presence of at least one breeding site for a disease transmitting pest on the at least one image;
c) determining (130) at least one action to control the at least one breeding site;
d) outputting (140) information about the presence of the at least one breeding site on the at least one image and at least one action to control the at least one breeding site.

12. A method for vector control management according to claim 11 using a hand held device, comprising:
a) acquiring, by a user of the hand held device, at least one image relating to an environmental area;
b) analyzing, using the processing unit of the device, the at least one image for the presence of at least one breeding site for a disease transmitting pest on the at least one image;
c) determining, using the processing unit of the device, at least one action to control the at least one breeding site;
d) outputting, using the output unit of the device, information about the presence of the at least one breeding site on the at least one image and at least one action to control the at least one breeding site.

13. Method according to claim 12, wherein the device comprises a transmitter, a GPS unit, and a receiver, and wherein step b) to c) comprises determination of the geographical location of the environmental area the determination comprising utilization of the GPS unit, and wherein step b) to c) comprises transmittance of the information in regard to the at least one geographical location of the environmental area, and wherein, step b) to c) comprises receipt of disease information in regard to disease incidences relating to a disease transmitting pest in the proximity of the geographical location as determined by the processing unit, and wherein step d) comprises the output unit of the disease information.

14. A computer program product comprising a program code which is stored on a data carrier and which causes a computer system comprising a main memory to execute the following steps when the program code is loaded into the main memory,
a) receiving at least one image relating to an environmental area;
b) analyzing the at least one image for the presence of at least one breeding site for a disease transmitting pest on the at least one image;
c) determining at least one action to control the at least one breeding site;
d) outputting information about the presence of the at least one breeding site on the at least one image and at least one action to control the at least one breeding site.

15. A computer readable medium having stored the computer program product of claim 14.
